Europäisches Patentamt

European Patent Office

Office européen des brevets

(11) Veröffentlichungsnummer: **0 330 970**
**A2**

## (12) EUROPÄISCHE PATENTANMELDUNG

(21) Anmeldenummer: 89102978.7

(22) Anmeldetag: 21.02.89

(51) Int. Cl.⁴: **B27C 5/02** , **B27F 1/00** ,
**B27C 5/06**

(30) Priorität: 26.02.88 DE 3806116

(43) Veröffentlichungstag der Anmeldung:
06.09.89 Patentblatt 89/36

(84) Benannte Vertragsstaaten:
**AT BE CH DE ES FR GB GR IT LI LU NL SE**

(71) Anmelder: **Stegherr, Ludolf**
**Fabrikstrasse 2**
**D-8413 Regenstauf(DE)**

(72) Erfinder: **Stegherr, Ludolf**
**Fabrikstrasse 2**
**D-8413 Regenstauf(DE)**

(74) Vertreter: **Wasmeier, Alfons et al**
**Wasmeier & Graf Postfach 382 Greflinger**
**Strasse 7**
**D-8400 Regensburg 1(DE)**

(54) **Vorrichtung zum Positionieren von bogenförmigen Kreuzsprossenrahmenteilen und zum Fräsen von trapezförmigen Ausnehmungen in diese Rahmenteile.**

(57) Zum Positionieren und Fräsen von Kreuzsprossenrahmenteilen in Rundbogen- oder Korbbogenform ist eine Spannschiene auf einem Arbeitstisch drehbar und verschiebbar befestigt. Eine an der Spannschiene angeordnete Rastvorrichtung wird mit Raststellen einer Schablone in Eingriff gebracht. Spannvorrichtungen legen die Position des Werkstückes zum Fräsen der trapezförmigen Aussparungen fest. Der Fräsvorgang erfolgt mit Hilfe eines Fräserwerkzeug-Aggregates, das am Arbeitstisch relativ zum Werkstück auf unterschiedliche Bogenformen einstellbar angeordnet ist. Mit Hilfe einer getrennten Spannschiene werden Aussparungen in Sprossenelementen zum Einsetzen in die Bögen gefräst, die um einen beliebigen Winkel drehbar sind, so daß die Ausfräsungen der jeweiligen Form der Ausfräsungen in den Rundbogen- oder Korbbogen-Rahmenteilen angepaßt sind, ohne daß für unterschiedliche Winkel ein unterschiedliches Werkzeug benötigt wird.

Fig. 7

## Vorrichtung zum Positionieren von bogenförmigen Kreuzsprossenrahmenteilen und zum Fräsen von trapezförmigen Ausnehmungen in diese Rahmenteile.

Die Erfindung betrifft die Herstellung von Kreuzsprossenverbindungen an Bogenrahmenteilen aus Holz für Türbögen, Fensterbögen und dergl., und zwar Rundbögen, Torbögen und dergl. sowie die hierfür erforderlichen Sprossenverbindungen.

Bei Tür-, Fenster- und dergl. Bögen, wie Halbkreisbögen, Torbögen oder dergl. ist es erforderlich, die Aussparungen in den Bögen, und zwar am äußeren Bogen auf der Innenseite, am mittleren Bogen auf der Außen- und der Innenseite, und am inneren Bogen auf der Außenseite, die zur Aufnahme der radial verlaufenden, geradlinigen Sprossen dienen und die symmetrisch-trapezförmig ausgebildet sind, sehr exakt in bezug auf Breite und Höhe sowie auf Position zu fräsen, damit die senkrecht dazu verlaufenden geradlinigen Sprossenteile genau in diese Aussparungen passen. Die bogenförmigen Rahmenteile, die üblicherweise aus einer Vielzahl von miteinander laminierten Schichten bestehen, behalten in der Regel ihre Form bei der Zwischenlagerung und Handhabung nicht exakt bei, so daß die Aussparungen individuell gefräst werden müssen, damit die hohe Genauigkeit sichergestellt wird, die für ein einwandfreies Sprossenbild erforderlich ist. Diese Aussparungen werden derzeit einzeln nacheinander in Handarbeit so gestanzt, gesägt oder geschnitten, daß das entsprechende bogenförmige Rahmenteil eingespannt und das Werkzeug von Hand gesondert auf die Stelle der jeweils vorzunehmenden Aussparung zugestellt wird bzw. umgekehrt. Dies ist ein sehr aufwendiger Vorgang, der pro Aussparung viel Zeit in Anspruch nimmt und der vom Bedienenden hohe Aufmerksamkeit und großes Geschick erfordert, wenn die Vielzahl der Aussparungen exakt ausgeführt werden sollen.

In Fällen, in denen diese Kreuzungswinkel zwischen Bögen und zugeordneten Sprossen verschieden von 90° sind, müssen die Sprossen an der Verbindungsstelle mit den Bögen bzw. die Bögen an der Eingriffsstelle mit den Sprossen eine unsymmetrische, durch diese Winkeländerung bedingte Gestalt haben. Dies gilt in gleicher Weise für solche Sprossenanordnungen, bei denen sich zwei geradlinige Sprossen in einem von einen Schnittwinkel von 90° abweichenden Winkel schneiden, ebenso für Aussparungen in korbbogenförmigen Rahmenteilen, bei denen die Sprossenleisten mit den Bogen in einem von 90° verschiedenen Winkel zusammentreffen. Derzeit werden die trapezförmigen Aussparungen in den Sprossen und Bögen von Hand bzw. mit Hilfe von Schablonen einzeln gefräst, wobei die Grundlinien der beiden in einer Sprosse gegenüberliegenden trapezförmigen Aussparungen parallel zueinander und im spitzen Winkel zur Längsachse der anderen Sprosse verlaufen. Der Querschnitt der Ausfräsung ist dabei im Falle von Korbbögen von Winkel zu Winkel verschieden, so daß für jeden gewünschten Winkel ein anderer Fräser erforderlich ist.

Aufgabe der Erfindung ist eine Vorrichtung, mit der die Aussparungen in bogenförmige Rahmenteile von Kreuzsprossenrahmen auf einfache und exakte Weise maschinell und ohne Verstellen der Fräswerkzeuge während des Fräsens aller Aussparungen eines Rahmenteiles gefräst werden können, und mit der die über den Umfang des bogenförmigen Rahmenteiles zu fräsenden Aussparungen in bezug auf Lage, Teilung und Tiefe selbsttätig exakt erstellt werden können. Des weiteren ist Aufgabe der Erfindung, diese Vorrichtung so auszugestalten, daß mit ihr unabhängig von teilkreisförmigen Bögen auch Korbbögen beliebiger Form bearbeitet, d.h. die trapezförmigen Aussparungen für die Aufnahme der Sprossenteile, sowie die kongruenten trapezförmigen Aussparungen in den Sprossenteilen selbst auf einfache, beliebig wiederholbare und winkelgenaue Weise gefräst werden können, ohne daß für unterschiedliche Winkelwerte unterschiedliche Fräserwerkzeuge erforderlich werden bzw. die Werkzeuge gewechselt bzw. verstellt werden müssen.

Eine diese Aufgabe gemäß der Erfindung lösende Vorrichtung ist gekennzeichnet durch eine Spannschiene, die auf einem Arbeitstisch drehbar und verschiebbar in der Tischebene befestigt ist und die in der Längsachse der Spannschiene verstellbare Spannelemente zur Aufnahme der beiden Bogenenden aufweist, eine Schablone mit Teilungen, die mit dem Arbeitstisch quer zur Spannschiene verschiebbar verbunden und der Spannschiene so zugeordnet ist, daß eine an der Spannschiene angeordnete Rastvorrichtung (z.B. ein Federbolzen) mit entsprechenden Raststellen (z.B. Bohrungen) in der Schablone nacheinander in Eingriff gebracht und die Spannschiene mit Werkstück um den gewünschten Teilungsschritt gedreht werden kann, Spannvorrichtungen, die die Position des Werkstückes zum Fräsen der Aussparungen festlegen, ein Fräserwerkzeug-Aggregat mit mindestens zwei Fräsen zum Fräsen der trapezförmigen Ausnehmungen, das am Arbeitstisch relativ zum Werkstück auf unterschiedliche Bogenformen einstellbar angeordnet ist, und eine mit dem Werkzeugträger verbundene Andrückrolle zur Anlage an der Innen- bzw. Außenfläche des zu fräsenden Bogens, die zur Festlegung der Tiefe der Ausnehmung relativ zum Bogen einstellbar ist.

Weiterhin wird mit der Erfindung vorgeschlagen, daß zum Positionieren und Fräsen von bogenförmigen Kreuzsprossenrahmenteilen die auf der Spannschiene angeordneten, die Kreuzsprossenrahmenteile festlegenden Einspannelemente sowohl in Richtung wie auch quer zu der Längsachse der Spannschiene verstellbar angeordnet sind.

Das Positionieren des rundbogenförmigen Werkstückes erfolgt in der Weise, daß die beiden freien Enden des Bogens auf der Spannschiene mit Hilfe der linken und der rechten Anschlagvorrichtung festgelegt werden, wobei der Bogen (Werkstück) auf dem Arbeitstisch aufliegt. Die Anschlagvorrichtungen bestehen jeweils aus einem festen und einem beweglichen Anschlag, die beide in Richtung der Längsachse der Spannschiene einstellbar sind. Der bewegliche Anschlag ist z.B. durch Federkraft gegen den festen Anschlag vorgespannt. Des weiteren greift zur Einstellung des Bogens eine Anschlag-bzw. Andrückrolle, die in radialer Richtung auf das Werkstück zustellbar ist, an der gekrümmten Seite (innen oder außen) des Werkstückes bzw. Bogens an. Diese Andrückrolle ist mit dem Fräserwerkzeug-Aggregat gekoppelt und legt die Tiefe der zu fräsenden Aussparung im Bogen fest. Der Bogen wird ferner durch Spannvorrichtungen, die vorzugsweise pneumatisch betätigbar sind und die von oben auf den Bogen einwirken, positioniert, so daß der Bogen beim Fräsen der Aussparungen seine Position nicht verändern kann. Die Spannschiene ist auf dem Arbeitstisch in der Werkstückebene verdrehbar und verschiebbar gelagert; sie wird jeweils (bei feststehenden Werkzeugen) um eine Winkelstrecke gedreht, die dem Abstand zweier benachbarter Aussparungen entspricht. Damit das Ausmaß der Drehung exakt und selbsttätig reproduzierbar ist, ist eine Schablone mit dem Arbeitstisch bzw. einer im Arbeitstisch verschiebbar geführten Führungsplatte verbunden; die Schablone weist diesen Teilstrecken entsprechende Raststellen aufweist, in die ein an der Spannschiene angebrachtes Rastelement eingreift. Damit entfällt jedes Messen der Drehstrecke, so daß die Bedienungsperson lediglich die Spannschiene um eine Teilung von einer Raststelle zur anderen verdrehen muß, um an dem Werkstück die exakten Frässtellen zu erzielen.

Durch Austausch der Schablone gegen eine solche mit unterschiedlichen Teilungswinkeln lassen sich die Abstände der gefrästen Aussparungen verändern. Die Spannschiene mit Schablone ist auf dem Arbeitstisch so angeordnet, daß sie senkrecht zur Längsachse des Tisches verschiebbar ist, das Spannschienensystem als Ganzes somit auf die Werkzeuge zu bzw. von den Werkzeugen weg bewegbar ist, um Bögen unterschiedlichen Durchmessers bzw. unterschiedlicher Größe bearbeiten zu können. Die Spannschiene ist dabei in der Ausgangsposition parallel zur Längsachse des Arbeitstisches angeordnet und in dieser Position zusammen mit der Schablone in der Querachse des Arbeitstisches über einen Teil dieses Arbeitstisches verschiebbar, wird die Spannschiene jedoch um die Lagerstelle gedreht, behält die Schablone ihre Position bei, wird also nicht mit gedreht.

Das gesamte Werkzeugaggregat ist unterhalb der entsprechend ausgesparten Arbeitstischplatte angeordnet und zur Durchführung des Fräsvorganges nach oben in Eingriff mit dem Werkstück bewegbar. Vorzugsweise ist das Werkzeugaggregat so ausgebildet, daß es aus zwei im Abstand voneinander, in gleicher Höhe und in radialer Richtung in einer Ebene hintereinander angeordneten, in Gegenrichtung umlaufenden Fräserwerkzeugen sowie einem mittig zwischen den und unterhalb der beiden Fräserwerkzeugen angeordneten dritten unteren Fräserwerkzeug gebildet ist. Die beiden auf gleicher Höhe befindlichen Fräserwerkzeuge dienen zum Fräsen der Aussparungen auf der Innenseite des äußeren Rundbogens, der Außenseite und der Innenseite des mittleren Rundbogens und der Außenseite des inneren Rundbogens, also zum Fräsen der trapezförmigen Aussparungen im Werkstück, sowie Fräsen von rechtwinkeligen und diagonal verlaufenden Sprossenverbindungen, während das tiefer gelegene Fräserwerkzeug beim Hochfahren des Aggregates die Abplattung im mittleren Bogen, nämlich eine rechteckförmige Aussparung zur Aufnahme der geradlinigen Sprossenleiste zwischen den beidens trapezförmigen Aussparungen des mittleren Bogens, fräst. Die beiden die trapezförmigen Aussparungen fräsenden Fräserwerkzeuge sind in ihrem Abstand zueinander verstellbar, so daß die Tiefe der trapezförmigen Aussparungen variiert werden kann. Diese beiden Fräserwerkzeuge sind in horizontaler Richtung beweglich geführt und z.B. mit Tragarmen verbunden, die in der Mitte ihrer Längserstreckung fest im Fräseraggregatrahmen gelagert sind und die an ihrem unteren Ende jeweils z.B. über eine Langloch-Schraub-Verbindung horizontal verstellbar sind, so daß das Übersetzungsverhältnis 1:1 sein kann. Das Fräseraggregat ist als Ganzes über einen Hubzylinder heb- und senkbar angeordnet. Das untere Fräserwerkzeug ist in der Höhe einstellbar, damit die Tiefe der Abplattung variiert werden kann. Die Höhenverstellung des unteren Fräserwerkzeuges erfolgt beispielsweise so, daß am Fräseraggregat oder am Maschinengestell ein Revolver mit verschiedenen Höhenanschlägen vorgesehen ist, die mit entsprechenden Anschlagrollen am Maschinenrahmen oder am Fräseraggregat zusammenwirken und die einen Schalter betätigen, der die Höhenbewegung des gesamten Fräseraggregates bei Kontaktgabe unterbricht. Durch die verschiedenen Höhenanschläge, die selbst einstellbar ausgebildet sind, werden verschiedene Höhenstellungen des unteren Fräserwerkzeuges erreicht und damit entsprechende unterschiedliche Tiefen der Abplattung eingestellt. Sollen keine Abplattungen gefräst werden, d.h. soll das untere Werkzeug nicht wirksam werden, wird die Einstellung der Höhensteuerung so vorgenommen, daß das Fräseraggregat nur eine begrenzte Höhenbewegung ausführt, die für das Fräsen der Aussparungen erforderlich ist, während dann, wenn trapezförmige Aussparungen und Plattungen gefräst werden sollen, d.h. wenn alle drei Fräserwerkzeuge arbeiten, das gesamte Fräseraggregat über den vollen Hub des Aggregates in die Höhe gefahren wird.

Mit dem erfindungsgemäßen Vorschlag wird erreicht, daß unterschiedliche rundbogenförmige Rahmenteile auf dem Werktisch zentrisch im Bogenmittelpunkt eingespannt und mit Hilfe einer Andrückrolle als Anschalg am Bogen in exaktem Abstand zum Werkzeug derart festgelegt werden, daß die jeweilige Stelle des Bogens, an der die trapezförmige(n) Aussparung(en) gefräst werden soll(en), dem Werzeug bzw. den Werkzeugen zwangsweise in exaktem Abstand zugeordnet ist, so daß die Aussparungen zwangsweise exakt gefräst werden. Im Anschluß an das Fräsen einer derartigen Aussparung auf der Innenfläche des äußeren Bogens oder jeweils gleichzeitig einer trapezförmigen Aussparung auf der Außenseite und der Innenseite des mittleren Bogens sowie der Abplattung auf dem mittleren Bogen als Verbindung zwischen den trapezförmigen Aussparungen auf der Innen- und der Außenseite wird, nachdem die Spannvorrichtungen gelöst worden sind, die Spannschiene mit dem darauf festgelegten Werkstück um eine Winkelteilung gedreht, die dem Bogenmaß zwischen zwei benachbarten Stellungen entspricht, und es wird die nächste Aussparung gefräst; dieser Vorgang wird für jede Aussparung bzw. jedes Paar von Aussparungen wiederholt, bis in dem Bogenteil sämtliche Aussparungen fertig gefräst sind. Anschließend wird das fertige Werkstück entnommen und ein neues Werkstück eingelegt. Hat dieses Werkstück gleiche Dimensionen und sind Größe und Lage der Aussparungen unverändert, sind keine weiteren Einstellung erforderlich. Ist das Werkstück jedoch abweichend in Größe oder Form, soll z.B. anstelle des äußeren Bogens der Mittelbogen gefräst werden, oder aber soll ein Bogen anderer Krümmung gefräst werden, werden die Spanner auf der Spannschiene entsprechend verstellt und wird die Spannschiene soweit gegen die Werkzeuge zugestellt, daß die entsprechende, zu bearbeitende Stelle des Bogenumfanges genau die Stelle des vorher bearbeiteten Bogens und damit die richtige Bearbeitungsposition einnimmt.

Beim Fräsen der Aussparungen an bogenförmigen Kreuzsprossenrahmenteilen für Rund- und Korbbögen wird mit der erfindungsgemäßen Vorrichtung erreicht, daß durch Verdrehen der das Rahmenteil aufnehmenden Schiene um die auf dem Arbeitstisch angeordnete Lagerungsstelle der Schiene und durch Verschieben der Schiene mit dem darauf festgelegten Rahmenteil in Richtung auf das Werkzeug mit einem Fräseraggregat die erforderlichen und je nach der Winkellage völlig unterschiedlichen Aussparungen am Rahmenteil gefertigt werden können. Damit lassen sich maschinell alle Formen von Rund- und Korbbögen mit Hilfe eines einzigen Fräseraggregates mit Ausfräsungen versehen und mit dem gleichen Fräseraggregat Ausfräsungen in den Sprossenverbindungen hierzu erzielen.

Zum Fräsen der Aussparungen in den korbbogenförmigen Rahmenteilen wird das Fräseraggregat nur mit einem einzigen Fräserwerkzeug ausgerüstet, das auf der Unterseite der korbbogenförmigen Rahmenteile durch Bewegen der Spannschiene mit dem darauf festgespannten Rahmenteil in einer Richtung senkrecht zur Drehachse des Werkzeuges eine einseitige Aussparung fräst. Bei einer Abweichung von der Nullage der Spannschiene mit der daran festgelegten Sprossenleiste, also einem Verdrehen der Spannschiene relativ zur Schablone, wird die Aussparung zwangsweise unsymmetrisch. Das Fräserprofil hängt dabei von dem jeweiligen Sprossenprofil ab, und die Aussparungen in den die einzelnen korbbogenförmigen Rahmen teile radial bzw. diagonal miteinander verbindenden Sprossenstäben werden in ihrer Form den Aussparungen ·in den korbbogenförmigen Rahmenteilen angepaßt.

Hierzu wird auf dem Arbeitstisch der Maschine die Spannschiene zur Aufnahme der Korbbogen-Rahmenteile entfernt und eine weitere Spannschiene auf dem Maschinentisch aufgesetzt, an der eine Sprossenleiste festgelegt wird, in die einseitig oder beidseitig Aussparungen mit Hilfe zweier gleicher, in einer gemeinsamen Ebene angeordneter Fräserwerkzeuge gefräst werden, die von unten her gegen die Sprossenleiste bewegt werden. Die Spannschiene ist dabei im Bereich des Fräseraggregates unterbrochen und die beiden Schienenhälften sind durch einen mit den einander zugewandten freien Enden der beiden Schienenhälften verbundenen Bogen befestigt, so daß das eine Fräserwerkzeug bei der Bewegung nach oben durch die Spannschiene nicht behindert wird.

Diese Spannschiene ist auf dem Arbeitstisch in der Tischebene verdrehbar gelagert. Der Drehwinkel wird auf einer Skala eingestellt, die mit dem Bogenstück verbunden ist, und das Bogenstück ist durch Führungsvorrichtungen auf dem Arbeitstisch drehbar geführt. In der eingestellten Position wird die Spannschiene mit der Sprossenleiste durch Positioniervorrichtungen festgelegt, ferner wird die Sprossenleiste durch einen Endanschlag an der Spannschiene, an der eine Längenmeßskala angebracht ist, eingestellt. Durch Verdrehen der Spannschiene mit der Sprossenleiste wird bei feststehenden Fräserwerkzeugen die Ausfräsung an der Sprossenleiste vorgenommen, so daß z.B. in der Nullstellung der Spannschiene Ausfräsungen gefräst werden, die für den Einsatz von vertikalen, zugeordneten Sprossenleisten bestimmt sind, während bei einer Verdrehung der Spannschiene Ausfräsungen gefräst werden, die eine entsprechende Schrägstellung der Querleiste zur Sprossenleiste mit den Ausfräsungen erzielt wird.

Nachstehend wird die Erfindung in Verbindung mit der Zeichnung anhand eines Ausführungsbeispieles erläutert. Es zeigt:

Fig. 1 eine schematische Darstellung eines Kreuzsprossenrahmenteiles für einen Tür- oder Fensterbogen,

Fig. 2 die Spannschiene mit eingesetztem, äußerem Bogenteil in Aufsicht,

Fig. 3 eine Seiten-Schnittdarstellung der Anordnung nach Fig. 2 längs der Linie X-X,

Fig. 4 die Spannvorrichtung nach Fig. 3 in detaillierterer Darstellung,

Fig. 5 eine schematische Darstellung des Werkzeugaggregates mit angedeutetem äußerem und mittlerem Bogen, in Aufsicht,

Fig. 6 eine schematische Seitenansicht der Darstellung nach Fig. 5,

Fig. 7 eine schematische Aufsicht auf eine weitere Ausführungsform der Erfindung in Form einer Spannschiene mit eingesetzten Rundbogenteilen in Verbindung mit einem Fräseraggregat,

Fig. 8 eine schematische Aufsicht auf eine Spannschiene mit eingesetzten Korbbogenteilen in Verbindung mit einem Fräseraggregat,

Fig. 9 eine Prinzipdarstellung eines Korbbogens mit eingesetzten Sprossenleisten,

Fig. 10 eine Spannschiene für das Erstellen der Ausfräsungen an Sprossenleisten in Nullstellung,

Fig. 11 eine entsprechende gefräste Sprossenleiste mit Querleiste,

Fig. 12. die Anordnung nach Fig. 10 in einer um einen Winkel von 20° gedrehten Position,

Fig. 13 eine Sprossenleiste mit der in Fig. 12 dargestellten Ausfräsung und mit eingesetzter Querleiste, und

Fig. 14 eine Detaildarstellung einer Kreuzungsstelle von Sprossenteilen, hergestellt mit einer Vorrichtung nach Fig. 10.

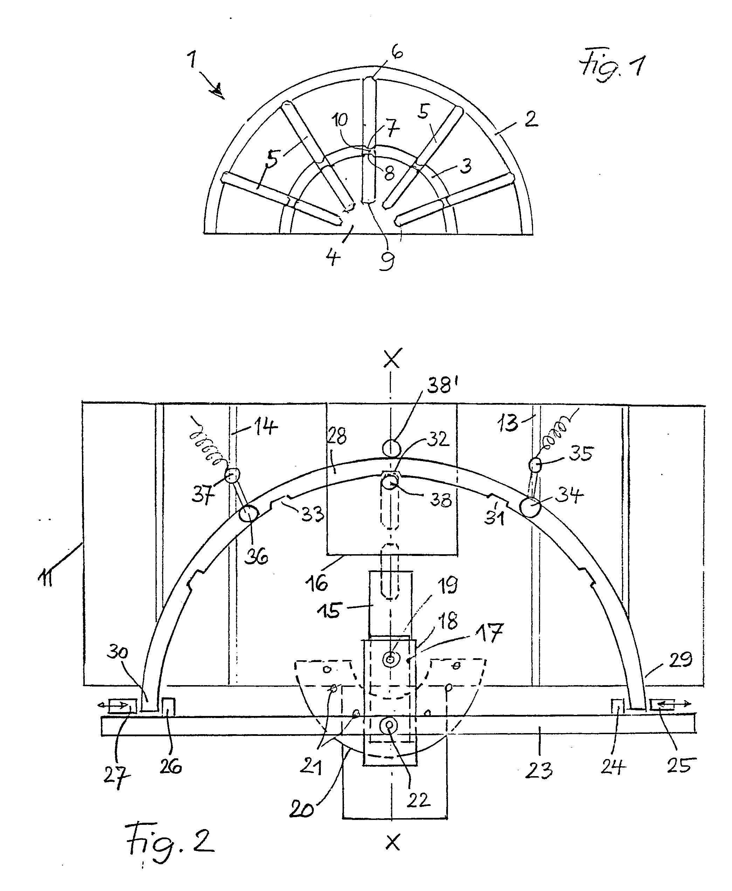

In Fig. 1 ist ein aus Kreuzsprossenrahmenteilen bestehender Tür- bzw. Fensterbogen 1 dargestellt, der aus einem äußeren Bogen 2, einem mittleren Bogen 3, einem inneren bogenförmigen Kern 4 sowie aus radial vom Kern 4 nach außen verlaufenden geradlinigen Sprossen 5 besteht. Die bogenförmigen Rahmenteile 2, 3, 4 weisen symmetrisch trapezförmige Aussparungen 6 auf der Innenseite des Bogens 2, entsprechende Aussparungen 7 und 8 auf der Außenseite und Innenseite des Bogens 3 sowie entsprechende Aussparungen 9 auf der Außenseite des bogenförmigen Kernes 4 auf. Zwischen den Aussparungen 7 und 8 ist im mittleren Bogen eine Abplattung 10 vorgesehen, damit die geradlinige Sprosse 5, die eine entsprechende Abplattung aufweist, bündig mit dem Bogen 3 eingesetzt werden kann.

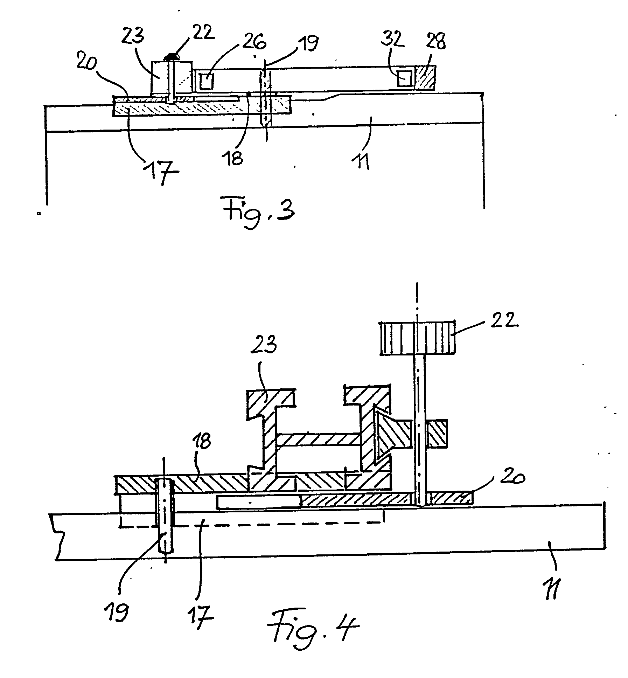

In den Figuren 2, 3 und 4 ist die Spannschienenanordnung dargestellt. Auf einer Arbeitstischplatte 11 mit Verlängerung 12 sind parallel zueinander verlaufende Nuten 13, 14, zur Aufnahme von Spannvorrichtungen, mit denen das Werkstück auf der Tischplatte 11 festgelegt wird, sowie ein mittiger Führungskanal 15 mit verbreiterter Ausnehmung 16 für das Werkzeugaggregat vorgesehen. Führungskanal 15 und Aussparung 16 sind voneinander getrennt. Im Führungskanal 15 ist eine Führungsplatte 17 geführt, die in Längsrichtung des Führungskanales 15 beweglich ist und die eine Trägerplatte 18 aufnimmt, welche mit der Führungsplatte 17 in einer Lagerstelle 19 drehbar gelagert ist. In die Führungsplatte 17 eingesetzt bzw. auf sie aufgesetzt ist eine Schablone 20, die auswechselbar ist und die Raststellen bzw. Bohrungen 21 aufweist, die zur Aufnahme eines Rastelementes bzw. Arretier bolzens 22 dient. Dieses Arretierelement 22 ist auf einer Spannschiene 23 befestigt und durch die Spannschiene 23 hindurch nach unten geführt, wo es in eine der Bohrungen 21 einrastet und damit die Position der Spannschiene festlegt. Die Spannschiene 23 selbst ist mit dem Träger 18 fest verbunden, so daß Träger 18 und Spannschiene 23 miteinander um die Drehstelle 19 in einer zur Tischebene parallelen Ebene verdrehbar und gemeinsam mit der Führungsplatte 17 verschiebbar sind. Die Spannschiene ist als Profilschiene ausgebildet, die die Trägerplatte 18 aufnimmt. An der Spannschiene bzw. einem mit der Spannschiene verbundenen Ansatz ist das Arretierelement 22, und zwar in Form eines Arretierbolzens befestigt, der in die entsprechende Bohrung 21 der Schablone eingreifen kann.

Die Spannschiene 23 weist zu beiden Seiten jeweils einen fest, in Längsrichtung der Schiene 23 einstellbaren Anschalg 24 bzw. 26 sowie einen weiter außen gelegenen einstellbaren Spanner 25 bzw. 27 auf, der entweder unter Federdruck oder durch sonstige Spannelemente gegen den jeweiligen festen Anschlag 24 bzw. 26 andrückbar ist. Zwischen den Anschlägen 24 und 25 bzw. 26 und 27 ist jeweils ein Bogenende 29 bzw. 30 eines bogenförmigen Werkstückes 28 eingespannt. Bei dem dargestellten bogenförmigen Werkstück 28 werden auf dessen Innenseite Aussparungen 31, 32, 33 gefräst, die symmetrisch trapezförmig sind und die zur Aufnahme der geradlinigen Sprossenteile 5 (Fig. 1) dienen. Zum Einspannen des an den Enden 29 und 30 festgehaltenen bogenförmigen Werkstückes 28 sind druckluftbetätigte Spannvorrichtungen 34, 35 sowie 36, 37 vorgesehen, die in den Nuten 14, 15 der Auflageplatte 12 verschiebbar ausgebildet sind. Diese Spannvorrichtungen positionieren das Werkstück während des Fräsens. Mit der Innenseite bzw. der Außenseite des Werkstückes 28 steht eine Anschlag- oder Andrückrolle 38 bzw. 38′ in Verbindung, die in radialer Richtung verstellbar ist und die mit dem Werkzeugaggregat fest verbunden ist, so daß der Abstand zwischen Andrückrolle 38 bzw. 38′ und Fräserwerkzeug fest vorgegeben ist und dadurch stets gewährleistet ist, daß bei Anlage der Rolle am Werkstück eine vorgegebene, exakte Tiefe der Aussparung 32 gefräst wird. Der Abstand zwischen Andrückrolle 38 bzw. 38′ und Fräserwerkzeug ist auf unterschiedliche Tiefen der Aussparungen einstellbar. Die Andrückrolle geht dabei zusammen mit dem Werkzeugaggregat beim Fräsen hoch, so daß das Fräserwerkzeug durch die Andrückrolle nicht behindert wird.

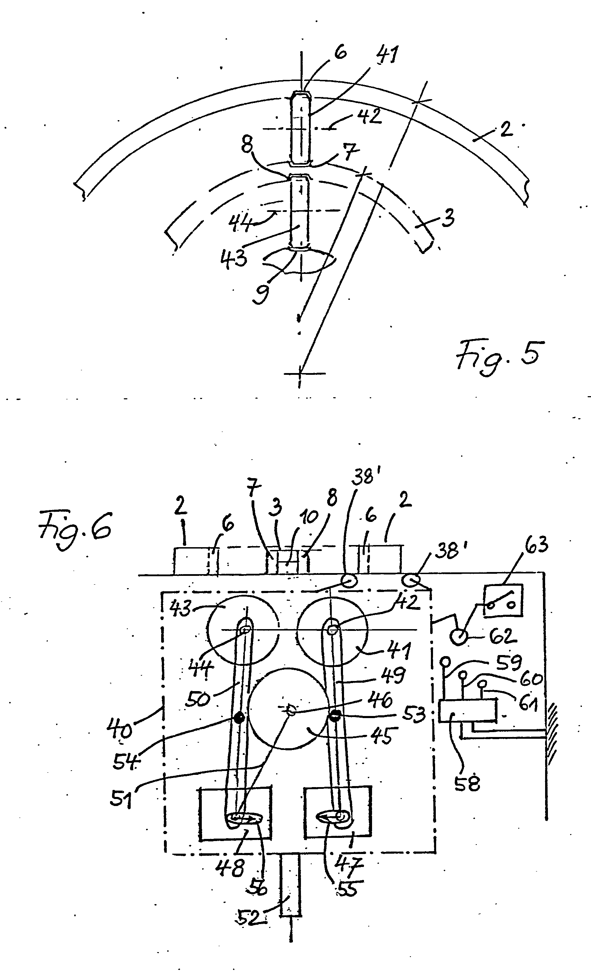

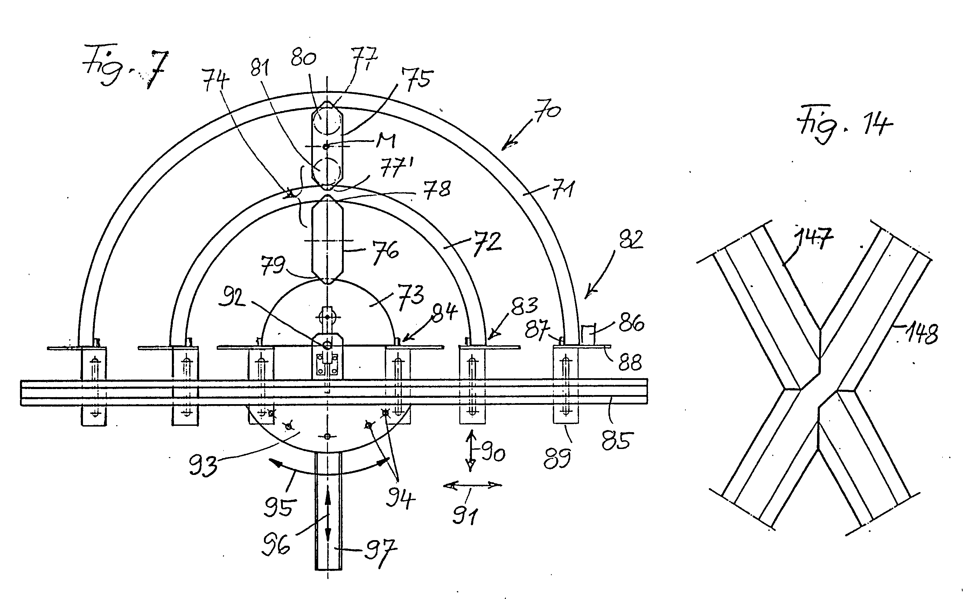

Das Fräserwerkzeug-Aggregat 40 ist in den Figuren 5 und 6 schematisch dargestellt. Die beiden in gleicher Höhe und in radialer Richtung in einer Ebene hintereinander angeordneten Fräserwerkzeuge 41 mit Drehachse 42 sowie 43 mit Drehachse 44 dienen zum Fräsen der trapezförmigen Aussparungen 32 bzw. 6, 7, 8, 9; das mittig zwischen den beiden Werkzeugen 41 und 43 unterhalb derselben angeordnete dritte Werkzeug 45 mit Drehachse 46, die parallel zu den Drehachsen 42 und 44 verläuft, übernimmt das Fräsen der Abplattung 10 in einem Arbeitsgang mit dem Fräsen der trapezförmigen Aussparungen, wenn das gesamte Werkzeugaggregat 40 bis zum Werkstück und über das Werkstück hinaus hochgefahren wird. Die Werkzeuge 41 und 43 werden durch Antriebsmotoren 47, 48 angetrieben; für den Antrieb des Werkzeuges 45 kann ein eigener Antrieb vorgesehen sein oder aber einer der Antriebe 47 bzw. 48 verwendet werden. Die Fräserwerkzeuge 41 und 43 sind über Arme 49, 50 mit den Antriebsvorrichtungen 47, 48 verbunden, während das Werkzeug 45 über die Antriebsverbindung 51 mit der Antriebsvorrichtung 48 in Verbindung steht. Das gesamte Werkzeugaggregat 40 wird über einen Hubzylinder 52 in Pfeilrichtung angehoben und abgesenkt. Eine Verstellung der Fräserwerkzeuge 41 und 43 in horizontaler Richtung (Pfeilrichtung) wird in der Weise vorgenommen, daß die Arme bei 53 und 54 gelenkig angeordnet und über Einstellvorrichtungen 55, 56 verstellbar sind, wobei z.B. das Übersetzungsverhältnis 1:1 gewählt ist. Diese Einstellvorrichtungen 55 und 56 sind z.B. Schlitz-Schraub-Verbindungen.

An dem Fräseraggregat 40 ist die Andrückrolle 38 bzw. 38′ befestigt, so daß bei einem Anheben des Fräseraggregates 40 in die Arbeitsposition des Fräsers die Rolle über das Werkstück hinaus angehoben wird. Des weiteren ist am Maschinenrahmen eine revolverartige Einstellvorrichtung 58 vorgesehen, auf deren Kopf Anschläge 59, 60, 61 unterschiedlicher Höhenlage vorgesehen sind, die mit einer am Fräseraggregat befestigten Anlaufrolle 62 beim Anheben des Fräseraggregates in Kontakt kommen. Die Anlaufrolle 62 betätigt dabei ein Relais bzw. einen Schalter 63, der die Hubvorrichtung 52 abschaltet, so daß der Hubweg, den das Fräseraggregat 40 ausführt, genau eingestellt werden kann. Damit kann das Fräserwerkzeug 45 in exakter Weise höhengesteuert werden, so daß damit die Tiefe der Abplattung 10 durch die begrenzte Höhenbewegung des Fräseraggregates 40 eingestellt werden kann. Wenn keine Abplattung 10 gefräst werden soll, wird die Anlaufrolle 62 unwirksam gemacht und schaltet nicht.

Bei der Ausführungsform nach Fig. 7 ist mit 70 eine Rundbogenanordnung bezeichnet, die aus einem Außenbogenteil 71, einem Mittelbogenteil 72 und einem halbkreisförmigen Innenstück 73 besteht. 74 bezeichnet das Fräseraggregat, das aus zwei Fräsern 75 und 76 besteht, die beide vorzugsweise identisch ausgebildet und achsparallel zueinander sowie in einer gemeinsamen Ebene angeordnet sind. Mit dem Fräser 75 werden eine Aussparung 77 im Außenbogenteil 71 sowie eine entsprechende Aussparung 77′ auf der Außenseite des Mittelbogenteiles 72 gefräst, während mit dem Fräser 76 eine Aussparung 78 auf der Innenseite des Mittelbogenteiles 72 und eine Aussparung 70 auf dem Innenstück 73 gefräst werden. Damit die Bogenteile 71 und 72 relativ zu den Fräserwerkzeugen die zum Fräsen der Aussparungen 77, 77′ und 78 erforderliche einwandfreie Position erhalten, sind Andrückrollen 80, 81 vorgesehen, die in radialer Richtung verstellbar sind und die als Anschlag für die Bogenteile 71 und 72 dienen, die über Spannvorrichtungen 82, 83, 84 mit einer am Maschinenrahmen befestigten Spannschiene 85 befestigt sind. Die Spannvorrichtungen 82 - 84 bestehen jeweils aus einem Klemmring 86 und einem Widerlager 87, die auf einer Platte 88 festgelegt sind, die ihrerseits mit einer Halterung 89 verbunden ist. Die Halterung 89 ist auf der Spannschiene 85 sowohl quer zur Spannschiene (Pfeil 91) verschiebbar, so daß damit Bögen mit unterschiedlichem Radius aufgespannt werden können. Aus Bearbeitungsgründen wird jeweils nur ein einziger Bogenteil bearbeitet. Mit einer derartigen Spannanordnung 82 bzw. 85 - 89 wird erreicht, daß der jeweilige Bogenteil in radialer Richtung des Bogens relativ zur Auflagefläche verschoben werden kann. Eine Verdrehung des jeweiligen Bogenteiles erfolgt um einen Drehpunkt 92 mit Hilfe einer Schablone 93, wobei die Schablone Rastvorrichtungen 94 aufweist, in denen die Schablone um bestimmte Winkelwerte gedreht und dann verriegelt werden kann. Die Schablone 93 ist mit der Spannschiene 85 fest verbunden, so daß bei einer Verdrehung der Schablone 93 die Spannschiene mit dem jeweiligen über die Spannvorrichtung festgelegten Bogenteil um den eingestellten Winkel verdrehbar ist (Pfeil 95). Die Schablone 93 mit der Spannschiene 25 und dem darauf festgelegten Werkstück ist ferner in radialer Richtung (Pfeil 96) mit Hilfe einer Verlängerung 97 verschiebbar, die auf dem Werktisch geführt ist.

Mit 100 ist in Fig. 8 eine Korbbogenanordnung bezeichnet, die aus einem Außenbogenteil 101, einem Mittelbogenteil 102 und einem halbkreisförmigen Innenstück 103 besteht. Mit 104 ist ein Spezialfräser bezeichnet, der nur an der Unterseite der Bogen Ausfräsungen 105 vornimmt, wie in der Skizze oberhalb der Fig. 8 angedeutet. Der Außenbogen ist bei 106 und 106', der Mittelbogen bei 107 und 107' und das Innenstück bei 108 und 108' eingespannt. Mit 109, 110 und 111 sind Spannvorrichtungen bezeichnet, die in gleicher Weise ausgebildet sind, wie die Spannvorrichtung 82 - 89 nach Fig. 7. Da die Spannvorrichtungen, ferner die Ausbildung der Schablone nach Fig. 8 den Ausgestaltungen nach Fig. 7 voll entsprechen, werden diese Teile in Verbindung.mit Fig. 8 nicht nochmals erläutert.

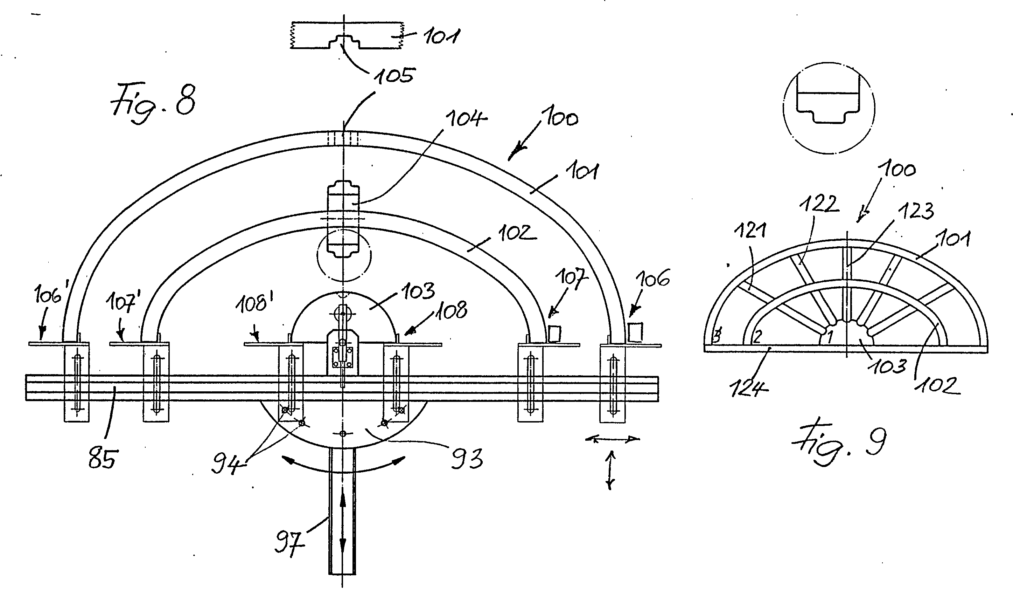

Der gesamte Korbbogen ist in Fig. 9 schematisch dargestellt. Die Einzelbögen 101, 102 und das Mittelstück 103 sind dabei durch diagonale Sprossenleisten 121, 122 und 123 verbunden, wobei die Sprossenleisten 123 mit den Bögen 101 und 102 einen rechten Winkel einschließt und die Ausfräsungen sowohl in den Bögen als auch in den Sprossenleisten symmetrisch ausgebildet sind, während die Sprossenleisten 121 und 122 mit den Bögen 101 und 102 einen von 90° abweichenden Winkel einschließen und die Ausfräsungen in den Bögen wie auch in den Sprossenleisten unsymmetrisch sind. Über der Darstellung nach Fig. 9 ist schematisch das Profil des Fräserwerkzeuges vergrößert dargestellt.

Zum Fräsen der Ausfräsungen in den Sprossenleisten 121, 122 und 123 wird die Spannschiene 85 mit Schablone 93 von der Tischplatte abgenommen (das Fräseraggregat wird nicht ausgewechselt), und auf die Tischplatte wird eine andere Spannschiene 125 aufgesetzt, die eine Längenmeßskala 126 aufweist und an der eine Sprossenleiste 127 festgelegt wird. Ferner wird das Fräserwerkzeug 104 durch eine Fräserwerkzeuganordnung 128 ausgewechselt, die aus den beiden Fräserwerkzeugen 129 und 130 besteht. Die beiden Fräserwerkzeuge sind in einer Ebene hintereinander und im Abstand voneinander so angeordnet, daß bei einem Hochfahren der Fräserwerkzeuge 129, 130 die Ausfräsungen 131 und 132 in die Sprossenleiste 127 gefräst werden. Diese Fräserwerkzeuge entsprechen den Fräserwerkzeugen 75 und 76 nach Fig. 7, so daß bei einer Umstellung der Anordnung nach Fig. 7 ein Auswechseln der Fräserwerkzeuge nicht erforderlich ist. Die Verbindung zwischen der Sprossenleiste 127, in der die Ausfräsungen 131 und 132 symmetrisch ausgebildet sind, und einer im Winkel von 90° zur Sprossenleiste 127 angeordneten und angesetzten Querleiste 133 ist in Fig. 11 schematisch dargestellt. 134 ist in Fig. 10 ein Freiraum, der die Spannschiene 125 in zwei voneinander getrennte Abschnitte 135 und 136 unterteilt, die beide miteinander durch einen Bogen 137 verbunden sind; dieser Bogen ist so ausgeformt, daß das Fräserwerkzeug 130 in der Höhe frei und ungehindert beweglich ist. Der Spannschienenbogen 137 weist eine Winkelskala 138 auf, an der das Ausmaß der Verdrehung von Spannschiene 125 und Sprossenleiste 127 ablesbar bzw. einstellbar ist. Mit 139 ist ein mit der Tischplatte befestigter Block bezeichnet, der eine Führung 140 für den Bogen 137 aufweist, so daß der Bogen 137 mit der Spannschiene 125 und der Sprossenleiste 127 in dieser Führung 140 verdrehbar angeordnet ist. Am Bogen 137 ist eine Anschlagvorrichtung 141 befestigt, die in der Ausgangslage bzw. Nullstellung der Spannschiene 125 in Anlage mit dem Block 139 kommt, so daß eine Rückstellung der Spannschiene in die Ausgangsposition einfach und sicher vorgenommen werden kann.

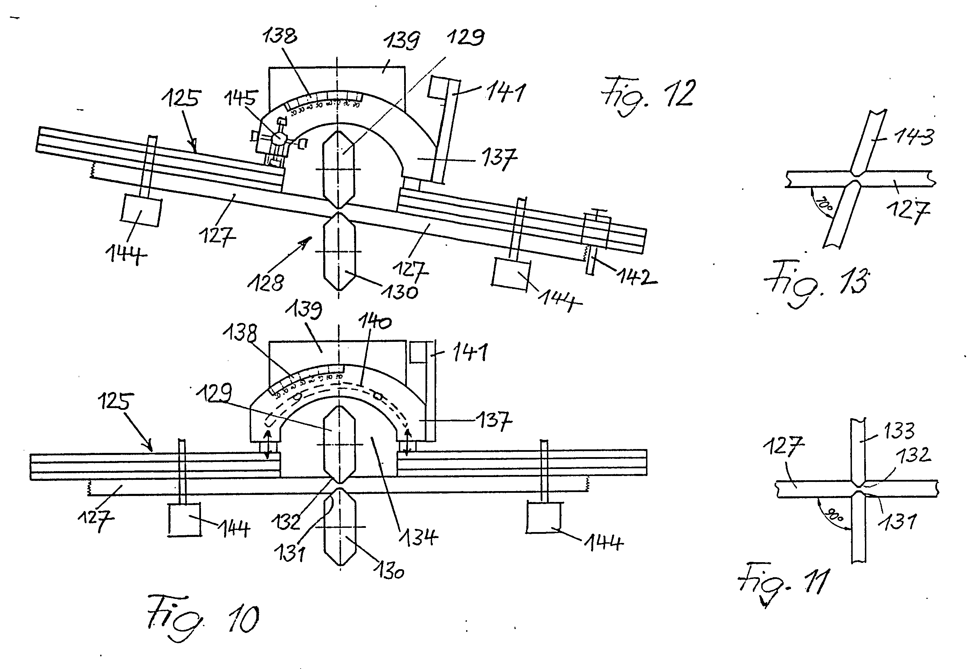

In Fig. 12 ist die Spannschiene 125 mit der Sprossenleiste 127 um einen Winkel von 20° gegenüber dem Fräseraggregat 128 und gegenüber dem Block 139 verdreht, so daß in die Sprossenleiste 127 eine unsymmetrische Ausfräsung gefräst wird, und die Querleiste 143 im Winkel von 70° gegenüber der Spannleiste 127 in diese eingesetzt ist. Mit 144 sind zwei Befestigungsvorrichtungen (pneumatische Feststeller) angedeutet, die die Sprossenleiste 127 mit der Spannschiene 125 verbinden. Des weiteren ist mit dem Bogen 137 ein Revolveranschlag 145 befestigt, dessen Anschläge auf unterschiedliche Dicken der Sprossenleiste abgestellt sind, und der zur Sprossenleiste hin und von ihr weg verstellbar angeordnet ist. Wie mit 146 schematisch angedeutet, ist der Bogen 137 relativ zur Schiene 125 von der Schiene 125 weg und auf sie zu quer verstellbar (Pfeilrichtung).

In Fig. 14 ist eine Kreuzsprossenverbindungsstelle im Detail dargestellt, aus der sich das Bild der Durchdringung der Querleiste 147 mit der Längsleiste 148 ergibt, wenn die Ausfräsungen mit einer Vorrichtung nach Fig. 10 bzw. 12 mit entsprechender Verschwenkung der Spannschiene 125 vorgenommen wird.

## Ansprüche

1. Vorrichtung zum Positionieren und Fräsen von bogenförmigen Kreuzsprossenrahmenteilen, mit der trapezförmige Ausnehmungen in die Innen- und/oder Außenwandungen der Bogen gefräst werden, die zur Aufnahme von geradlinigen Quersprossenteilen ausgebildet sind, sowie von Sprossenverbindungen in Sprossenleisten, die die bogenförmigen Rahmenteile mitein ander verbinden, **gekennzeichnet durch**

a) eine Spannschiene (23), die auf einem Arbeitstisch (11) drehbar und verschiebbar in der Tischebene befestigt ist und die in der Längsachse der Spannschiene verstellbare Spannelemente (24, 25, 26, 27) zur Aufnahme der beiden Bogenenden (29, 30) aufweist,

b) eine Schablone (20) mit Teilungen (21), die mit dem Arbeitstisch (11) quer zur Spannschiene (23) verschiebbar verbunden und der Spannschiene (23) so zugeordnet ist, daß eine an der Spannschiene angeordnete Rastvorrichtung (z.B. ein Federbolzen) (22) mit entsprechenden Raststellen (z.B. Bohrungen) (21) in der Schablone (20) nacheinander in Eingriff gebracht und die Spannschiene (23) mit Werkstück (28) um den gewünschten Teilungsschritt gedreht werden kann,

c) Spannvorrichtungen (34, 35, 36, 37), die die Position des Werkstückes (28) zum Fräsen der Aussparungen (6-10; 32, 33, 34) festlegen,

d) ein Fräserwerkzeug-Aggregat (40; 41 - 54) mit mindestens zwei Fräsern (41, 43) zum Fräsen der trapezförmigen Ausnehmungen (6 - 10), das am Arbeitstisch (11) relativ zum Werkstück (28) auf unterschiedliche Bogenformen einstellbar angeordnet ist, und

e) eine mit dem Werkzeugträger verbundene Andrückrolle (38 bzw. 39) zur Anlage an der Innen- bzw. Außenfläche des zu fräsenden Bogens (28), die zur Festlegung der Tiefe der Ausnehmung (32) relativ zum Bogen (28) einstellbar ist.

2. Vorrichtung nach Anspruch 1, dadurch gekennzeichnet, daß zum Positionieren und Fräsen von bogenförmigen Kreuzsprossenrahmenteilen die auf der Spannschiene (85) angeordneten, die Kreuzsprossenrahmenteile (71, 72, 73) festlegenden Einspannelemente (82) sowohl in Richtung wie auch quer zu der Längsachse der Spannschiene (85) verstellbar angeordnet sind.

3. Vorrichtung nach Anspruch 1, dadurchs gekennzeichnet, daß die Spannschiene (23) mit einer Trägerplatte (18) fest verbunden ist, die auf dem Arbeitstisch (11) drehbar gelagert ist, und daß die Schablone (20) mit der Trägerplatte (18) auswechselbar verbunden ist.

4. Vorrichtung nach Anspruch 1, 2 oder 3, dadurch gekennzeichnet, daß die Schablone (20, 93) eine Platte mit auf einer bogenförmigen Linie angeordneten Bohrungen (21, 94) zur Aufnahme eines Arretierbolzens (22) an der Spannschiene (23, 85) ist, und mit der Schiene (23, 85) um einen Schwenkpunkt (19, 92) verdrehbar sowie gegen den Anschlag (38, 80, 81) verschiebbar ist.

5. Vorrichtung nach einem der Ansprüche 1 - 4, dadurch gekennzeichnet, daß der mit dem Werkzeugträger verbundene, zur Festlegung der Tiefe der Ausnehmung relativ zum Bogen einstellbare Anschlag, z.B. Andrückrollen (80, 81), zur Anlage an der Innen- oder Außenfläche des zu fräsenden Bogens schwenkbar um einen Drehpunkt (M) zwischen Außen-und Mittelbogen (71, 72) und in radialer Richtung einstellbar ausgebildet ist.

6. Vorrichtung nach einem der Ansprüche 1 - 5, dadurch gekennzeichnet, daß die Spannelemente (24 - 27) zur Aufnahme der Spannschiene (23) aus in der Längsachse der Spannschiene verstellbaren, der Innenseite des Bogens (28) zugeordneten Festanschlägen (24, 26) und in gleicher Längsachse der Spannschiene verstellbaren, auf der Außenseite des Bogens (28) angeordneten beweglichen, unter Federdruck oder in entsprechender Weise vorgespannten Anschlägen (25, 27) bestehen.

7. Vorrichtung nach einem der Ansprüche 1 - 6, dadurch gekennzeichnet, daß das Fräserwerkzeug-Aggregat (40; 74) im Inneren des Maschinengestells höhenverschiebbar und wahlweise zusätzlich in horizontaler Ebene auf das Werkstück zustellbar angeordnet ist und aus drei Fräswerkzeugen (41, 43, 45; 75, 76, 104) besteht, daß zwei identische, gegenläufig angetriebene, in einer gemeinsamen horizontalen Ebene und in radialer Richtung hintereinander im Abstand angeordnete Fräswerkzeuge (41, 43; 75, 76) zum Fräsen der Ausnehmungen auf der Außenseite und/oder der Innenseite des Bogens vorgesehen sind, und daß ein weiterer Fräser (45; 104) unterhalb der und mittig zwischen den beiden Fräserwerkzeugen (41, 43; 75, 76) angeordnet ist, um die Plattung (10) in einem der bogenförmigen Sprossenteile (3) an der Verbindungsstelle mit der geradlinigen, zugehörigen Sprossenleiste (5) zu fräsen, und daß die Fräserwerkzeuge (41, 43; 75, 76) wahlweise gemeinsam oder getrennt voneinander in einer Ebene parallel zur Tischebene verschiebbar sind.

8. Vorrichtung nach einem der Ansprüche 1 - 7, dadurch gekennzeichnet, daß der Arbeitstisch Nuten (13, 14) mit darin geführten, z.B. pneumatisch betätigten Feststellvorrichtungen (34 - 37) aufweist, die das Werkstück (28) auf dem Arbeitstisch (11) festlegen.

9. Vorrichtung nach einem der Ansprüche 1 - 8, dadurch gekennzeichnet, daß dem Fräserwerkzeug-Aggregat (40) ein am Maschinengestell angeordneter Revolver (58) mit einstellbaren Betätigungselementen (59, 60, 61) zugeordnet ist, die beim Hochfahren des Fräserwerkzeug-Aggregates (40) einen Schalter (62, 63) beaufschlagen und die Hubvorrichtung (52) abschalten, wodurch die Höhenbewegung des Fräserwerkzeuges (45) exakt begrenzbar ist.

10. Vorrichtung nach Anspruch 1, 2 oder 3, zum Fräsen von korbbögenförmigen Kreuzsprossenrahmenteilen, dadurch gekennzeichnet, daß die Ausfräsungen (105) an den korbbogenförmigen Rahmenteilen (101, 102) mit Hilfe eines Spezialfräsers (104) auf der Unterseite hergestellt sind, und daß die Spannschiene (85) lösbar am Maschinentisch befestigt ist.

11. Vorrichtung nach einem der Ansprüche 1 - 10, ddurch gekennzeichnet, daß die Kreuzsprossenrahmenteile (71, 72, 101, 102) aufnehmende Spannschiene (85) gegen eine andere Spannschiene (127) zum Fräsen von Aussparungen an Sprossenleisten (127) auswechselbar ausgebildet ist.

12. Vorrichtung nach Anspruch 1, dadurch gekennzeichnet, daß zum Positionieren und Fräsen von rechtwinkligen und von von rechten Winkel abweichenden Sprosenverbindungen für Sprossenleisten (127, 133; 127, 143) für kreisbogenförmige oder korbbogenförmige Kreuzsprossenrahmenteile (71, 72; 101, 102) eine weitere drehbare und verschiebbare Spannschiene (125) lösbar und auswechselbar auf dem Arbeitstisch festgelegt ist, die im Bereich des Fräseraggregates (129, 130) unterbrochen und durch einen das Fräseraggregat umschließenden Bogen (137) geschlossen ist, wobei die Sprossenleiste an der Schiene festgelegt ist und die Längsachse der Schiene im Bereich der Mittellängsachse des Fräseraggregates verläuft, derart, daß die Sprossenleiste mit dem Fräseraggregat zum Fräsen der Ausnehmungen in Eingriff steht.

13. Vorrichtung nach Anspruch 12, dadurchs gekennzeichnet, daß die Spannschiene (135) einen einstellbaren Längsanschlag (142) für die Sprossenleiste (127) und eine Längenmeßskala (126) besitzt, und daß der Bogen (137) eine Winkelskala (138) zum exakten Verschwenken von Spannschiene (125) und Sprossenleiste (127) aufweist.

14. Vorrichtung nach einem der Ansprüche 12 oder 13, dadurch gekennzeichnet, daß der Bogenteil (137) der Schiene (125) aufdem Maschinentisch drehbar (bei 140) geführt und/oder relativ zur Schiene (125) verstellbar (bei 146) ausgebildet ist, und daß wahlweise am Bogen (137) ein Anschlag (141) für die Rückstellung in die Ausgangslages befestigt ist, der in der Ausgangslage in Anlage mit dem Maschinentisch (139) kommt.

15. Vorrichtung nach einem der Ansprüche 12 -14, dadurch gekennzeichnet, daß Positionieranschläge (145) in Form von Revolveranschlägen vorgesehen sind, mit denen verschiedene Dickenabmessungen des Werkstückes einstellbar sind.

Fig. 1

Fig. 2

23  22  26  19  32  28

20

17  18  11

Fig. 3

23

18

22

20

19  17

Fig. 4

11

Fig. 5

Fig. 6

Fig. 14

Fig. 7

Fig. 8

Fig. 9

101
105
104
100
101
102
103
108
107
106
106'
107'
108'
94
93
97
85

122
100
121
123
101
3 2 1
103
124
102

EP 0 330 970 A2

Fig. 13

Fig. 11

Fig. 12

Fig. 10